(19) **Europäisches Patentamt European Patent Office Office européen des brevets**

(11) **EP 4 060 059 B1**

(12) **EUROPEAN PATENT SPECIFICATION**

(45) Date of publication and mention of the grant of the patent:
**26.02.2025 Bulletin 2025/09**

(21) Application number: **20886738.2**

(22) Date of filing: **13.11.2020**

(51) International Patent Classification (IPC):
$C21D\ 6/00^{(2006.01)}$    $C21D\ 8/12^{(2006.01)}$
$C21D\ 9/46^{(2006.01)}$    $C22C\ 38/00^{(2006.01)}$
$C22C\ 38/02^{(2006.01)}$    $C22C\ 38/04^{(2006.01)}$
$C22C\ 38/06^{(2006.01)}$    $C22C\ 38/08^{(2006.01)}$
$C22C\ 38/10^{(2006.01)}$    $C22C\ 38/16^{(2006.01)}$
$C22C\ 38/60^{(2006.01)}$    $H01F\ 1/147^{(2006.01)}$
$H01F\ 1/16^{(2006.01)}$

(52) Cooperative Patent Classification (CPC):
C21D 6/008; C21D 6/001; C21D 6/005;
C21D 8/1222; C21D 8/1233; C21D 8/1261;
C21D 8/1266; C21D 8/1272; C21D 9/46;
C22C 38/001; C22C 38/002; C22C 38/004;
C22C 38/005; C22C 38/008; C22C 38/02;    (Cont.)

(86) International application number:
**PCT/JP2020/042465**

(87) International publication number:
**WO 2021/095854 (20.05.2021 Gazette 2021/20)**

(54) **METHOD FOR MANUFACTURING NON-ORIENTED ELECTRICAL STEEL SHEET**

VERFAHREN ZUR HERSTELLUNG VON NICHTORIENTIERTEM ELEKTROSTAHLBLECH

PROCÉDÉ DE FABRICATION DE TÔLE D'ACIER ÉLECTROMAGNÉTIQUE NON ORIENTÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2019 JP 2019206708**

(43) Date of publication of application:
**21.09.2022 Bulletin 2022/38**

(73) Proprietor: **NIPPON STEEL CORPORATION Chiyoda-ku Tokyo 100-8071 (JP)**

(72) Inventors:
• **MURAKAWA, Tesshu** Tokyo 100-8071 (JP)
• **TOMITA, Miho** Tokyo 100-8071 (JP)
• **KANO, Satoshi** Tokyo 100-8071 (JP)

(74) Representative: **Vossius & Partner Patentanwälte Rechtsanwälte mbB Siebertstraße 3 81675 München (DE)**

(56) References cited:
EP-A1- 2 602 335    EP-A1- 3 140 430
EP-A1- 3 214 195    EP-B1- 3 140 430
JP-A- 2017 145 462    JP-A- 2017 193 731
JP-A- 2017 193 731    JP-A- 2019 019 355
JP-A- 2019 178 380    JP-A- 2019 178 380
KR-A- 20140 084 895

EP 4 060 059 B1

(Cont. next page)

(52) Cooperative Patent Classification (CPC): (Cont.)
**C22C 38/04; C22C 38/06; C22C 38/08;**
**C22C 38/10; C22C 38/16; C22C 38/60;**
**H01F 1/14775; H01F 1/16;** Y02P 10/20

## Description

[Technical Field of the Invention]

The present invention relates to a method for manufacturing a non-oriented electrical steel sheet.

[Related Art]

A non-oriented electrical steel sheet is used for, for example, a core of a motor. A non-oriented electrical steel sheet is required to have excellent magnetic characteristics on an average in all directions parallel to the sheet surface of the non-oriented electrical steel sheet (hereinafter, referred to as "whole circumferential average (omnidirectional average) in a sheet surface") and to have, for example, a low iron loss and high magnetic flux density. Although various techniques have been proposed so far, it is difficult to obtain sufficient magnetic characteristics on the whole circumferential average in a sheet surface. For example, even if sufficient magnetic characteristics can be obtained in a specific direction present in a sheet surface, sufficient magnetic characteristics may not be obtained in other directions.

Patent Document 3 discloses an electromagnetic steel sheet that is of an $\alpha$-$\gamma$ transformation system, and contains at least Si: 2.0 mass% or more and 4.0 mass% or less or Al: 0.6 mass% or more and 3.0 mass% or less, and is predominantly composed of Fe, wherein an X-ray random intensity ratio of {100}<011> on the steel sheet surface is 30 or more and 400 or less. Patent Document 4 discloses a process for the production of grain non-oriented electric Fe-Si steel strips to be used preferably for construction of electrical machines. Patent Document 5 discloses non-oriented electrical steel sheet comprising a chemical composition containing, in mass%, C: 0.005 % or less, Si: 1.0 % to 4.5 %, Mn: 0.02 % to 2.0 %, sol. Al: 0.001 % or less, P: 0.2 % or less, S + Se: 0.0010 % or less, N: 0.005 % or less, O: 0.005 % or less, and Cu: 0.02 % to 0.30 %, and the balance consisting of Fe and incidental impurities. Patent Document 6 discloses an electromagnetic steel sheet having a chemical composition consisting of, by mass%, C: 0.0050% or less, Si: 2.00 to 3.50%, Mn: 2.50 to 4.50%, P: 0.050% or less, S: 0.0050% or less, Al: 0.10% or less, N: 0.0025% or less, Ni: 0 to 1.000%, Cu: 0 to 0.100%, and the balance: Fe with impurities, and having X ray random intensity ratio in a {100}<011> crystal orientation on a steel sheet surface of the electromagnetic steel sheet of 15.0 to 50.0, and a standard deviation of 0.35 or less when an average crystal particle diameter is standardized at 1.0 on a surface in parallel to the steel sheet surface at a sheet thickness center position of the electromagnetic steel.

[Prior Art Document]

[Patent Document]

    [Patent Document 1] Japanese Patent No. 4029430
    [Patent Document 2] Japanese Patent No. 6319465
    [Patent Document 3] JP 2017 193731 A
    [Patent Document 4] EP 3 140 430 A1
    [Patent Document 5] EP 3 214 195 A1
    [Patent Document 6] JP 2019 178380 A

[Disclosure of the Invention]

[Problems to be Solved by the Invention]

The invention has been made in consideration of the above-mentioned problems, and an object of the invention is to provide a method for manufacturing a non-oriented electrical steel sheet that can obtain excellent magnetic characteristics on the whole circumferential average (omnidirectional average) in a sheet surface.

[Means for Solving the Problem]

The inventors have made diligent studies to solve the above-mentioned problems. As a result, the inventors have found out as follows. In order to obtain excellent magnetic characteristics on the whole circumferential average in a sheet surface, it is important to premise a chemical composition of an $\alpha$-$\gamma$ transformation system, to refine crystal structure by transformation into ferrite from austenite during hot rolling, and to make finer crystal structure by starting cooling in 0.1 sec from the completion of rolling of a final pass of finish rolling of the hot rolling.

In addition, the inventors have also found out that it is important to perform cold rolling at a desired cumulative rolling reduction and to cause {100} grains, which are less likely to be grown normally, to be likely to be grown by performing first annealing (process annealing) under desired conditions and causing projection recrystallization (hereinafter, referred to as bulging) to occur.

The present invention is defined in the appended claims.

[Effects of the Invention]

According to the aspect of the invention, it is possible to provide a method for manufacturing a non-oriented electrical steel sheet that can obtain excellent magnetic characteristics on the whole circumferential average (omnidirectional average) in a sheet surface.

[Embodiments of the Invention]

An embodiment of the invention will be described in detail below. However, the invention is not limited to only configuration disclosed in this embodiment, and can have various modifications without departing from the scope of the invention.

First, the chemical composition of a steel material used in a method for manufacturing a non-oriented electrical steel sheet according to this embodiment (which may be simply referred to as a steel material according to this embodiment) and a non-oriented electrical steel sheet manufactured by the method for manufacturing a non-oriented electrical steel sheet according to this embodiment (which may be simply referred to as a non-oriented electrical steel sheet according to this embodiment) will be described. In the following description, "%", which is a unit of the content of each element contained in the non-oriented electrical steel sheet or the steel material, means "mass%" unless otherwise noted. A limited numerical range described below using "to" includes a lower limit and an upper limit. Numeral values represented using "less than" or "exceed" are not included in a numerical range.

The non-oriented electrical steel sheet and the steel material according to this embodiment have a chemical composition in which ferrite-austenite transformation (hereinafter, referred to as $\alpha$-$\gamma$ transformation) may occur. Specifically, the non-oriented electrical steel sheet and the steel material according to this embodiment have a chemical composition that contains, by mass%, 0.0100% or less of C, 1.50 to 4.00% of Si, 0.0001 to 1.000% of sol.Al, 0.0100% or less of S, 0.0100% or less of N, 2.50 to 5.00% of Mn, Ni, Co, Pt, Pb, Cu, and Au in total, 0.000 to 0.400% of Sn, 0.000 to 0.400% of Sb, 0.000 to 0.400% of P, and 0.0000 to 0.0100% of Mg, Ca, Sr, Ba, Ce, La, Nd, Pr, Zn, and Cd in total with a remainder of Fe and impurities. Further, the Mn content, the Ni content, the Co content, the Pt content, the Pb content, the Cu content, the Au content, the Si content, and the sol.Al content satisfy predetermined conditions to be described later.

(0.0100% or less of C)

C increases the iron loss of the non-oriented electrical steel sheet, or causes magnetic aging. Accordingly, it is more preferable that the C content is lower. Such a phenomenon is remarkable in a case where the C content exceeds 0.0100%. For this reason, the C content is set to 0.0100% or less. A reduction in the C content also contributes to the uniform improvement of the magnetic characteristics in all directions in a sheet surface (the improvement of magnetic characteristics in the entire circumferential direction). For this reason, the C content is preferably 0.0060% or less, more preferably 0.0040% or less, and still more preferably 0.0020% or less.

The lower limit of the C content is not particularly limited, but it is preferable that the lower limit of the C content is set to 0.0005% or more on the basis of the cost of decarburization treatment during refining.

(1.50 to 4.00% of Si)

Si reduces an eddy-current loss and reduces the iron loss of the non-oriented electrical steel sheet by increasing electric resistance, or improves punching workability in a core by increasing a yield ratio. In a case where the Si content is less than 1.50%, these effects cannot be sufficiently obtained. Accordingly, the Si content is set to 1.50% or more. The Si content is preferably 2.00% or more and more preferably 2.50% or more.

On the other hand, in a case where the Si content exceeds 4.00%, the magnetic flux density of the non-oriented electrical steel sheet is reduced, punching workability is reduced due to an excessive increase in hardness, or it is difficult for cold rolling to be performed. Accordingly, the Si content is set to 4.00% or less. The Si content is preferably 3.50% or less and more preferably 3.30% or less.

(0.0001 to 1.000% of sol.Al)

sol.Al reduces an eddy-current loss and reduces the iron loss of the non-oriented electrical steel sheet by increasing electric resistance. sol.Al also contributes to the improvement of the relative magnitude of magnetic flux density B50 with respect to the saturated magnetic flux density. Here, the magnetic flux density B50 is magnetic flux density in a magnetic field of 5000 A/m. In a case where the sol.Al content is less than 0.0001%, these effects cannot be sufficiently obtained. Further, Al also has a desulfurization-promoting effect during the manufacture of steel. Accordingly, the sol.Al content is set to 0.0001% or more. The sol.Al content is preferably 0.001% or more, more preferably 0.010% or more, and still more preferably 0.300% or more.

On the other hand, in a case where the sol.Al content exceeds 1.000%, the magnetic flux density of the non-oriented electrical steel sheet is reduced or a yield ratio is reduced, so that punching workability is reduced. Accordingly, the sol.Al content is set to 1.000% or less. The sol.Al content is preferably 0.900% or less, more preferably 0.800% or less, and still more preferably 0.700% or less.

In this embodiment, the sol.Al means acid-soluble Al and indicates solute Al that is present in steel in the state of a solid solution.

(0.0100% or less of S)

S is not an essential element to be contained and is, for example, an element that is contained in steel as an impurity. S inhibits recrystallization and grain growth during annealing due to the precipitation of fine MnS. In a case where recrystallization and grain growth are inhibited, the iron loss of the non-oriented electrical steel sheet is increased and magnetic flux density is reduced. Accordingly, it is more preferable that the S content is lower. An increase in iron loss and a reduction in magnetic flux density, which are caused by the inhibition of the recrystallization and the grain growth, are remarkable in a case where the S content exceeds 0.0100%. For this reason, the S content is set to 0.0100% or less. The S content is preferably 0.0060% or less and more preferably 0.0040% or less.

The lower limit of the S content is not particularly limited, but it is preferable that the lower limit of the S content is set to 0.0003% or more on the basis of the cost of desulfurization treatment during refining.

(0.0100% or less of N)

Since N causes the magnetic characteristics of the non-oriented electrical steel sheet to deteriorate like C, it is more preferable that the N content is lower. Accordingly, the N content is set to 0.0100% or less. The N content is preferably 0.0050% or less and more preferably 0.0030% or less.

The lower limit of the N content is not particularly limited, but it is preferable that the lower limit of the N content is set to 0.0010% or more on the basis of the cost of denitrification treatment during refining.

(2.50 to 5.00% of Mn, Ni, Co, Pt, Pb, Cu, and Au in total)

Mn, Ni, Co, Pt, Pb, Cu, and Au are elements required to cause $\alpha$-$\gamma$ transformation to occur. For this reason, 2.50% or more of at least one of these elements is contained. All of these elements do not need to be contained, and the content of any one of them has only to be 2.50% or more. The total content of these elements is preferably 3.00% or more.

On the other hand, in a case where the total content of these elements exceeds 5.00%, cost may be increased and the magnetic flux density of the non-oriented electrical steel sheet may be reduced. Accordingly, the total content of these elements is set to 5.00% or less. The total content of these elements is preferably 4.50% or less.

The total of Mn, Ni, Co, Pt, Pb, Cu, and Au is obtained from the calculation of the total value of the contents of Mn, Ni, Co, Pt, Pb, Cu, and Au.

The non-oriented electrical steel sheet and the steel material according to this embodiment have a chemical composition satisfying the following conditions as conditions in which $\alpha$-$\gamma$ transformation may occur. That is, in a case where the Mn content (mass%) is denoted by [Mn], the Ni content (mass%) is denoted by [Ni], the Co content (mass%) is denoted by [Co], the Pt content (mass%) is denoted by [Pt], the Pb content (mass%) is denoted by [Pb], the Cu content (mass%) is denoted by [Cu], the Au content (mass%) is denoted by [Au], the Si content (mass%) is denoted by [Si], and the sol.Al content (mass%) is denoted by [sol.Al], the following Expression (1) is satisfied.

$$([Mn]+[Ni]+[Co]+[Pt]+[Pb]+[Cu]+[Au])-([Si]+[sol.Al])>0.00\% \ ... \ (1)$$

Since $\alpha$-$\gamma$ transformation does not occur in a case where Expression (1) having been described above is not satisfied, the magnetic flux density of the non-oriented electrical steel sheet is reduced. For this reason, the left side of Expression (1) exceeds 0.00%. The left side of Expression (1) is preferably 0.30% or more and more preferably 0.50% or more.

The upper limit of the left side of Expression (1) is not particularly limited, but may be 2.00% or less or 1.00% or less.

The remainder of the chemical composition of the non-oriented electrical steel sheet and the steel material according to this embodiment consists of Fe and impurities. Materials that are contained in raw materials, such as ore and scrap; materials that are contained in a manufacturing step; or materials that are allowed in a range where the characteristics of the non-oriented electrical steel sheet manufactured by the method for manufacturing a non-oriented electrical steel sheet according to this embodiment is not adversely affect are exemplified as the impurities.

The non-oriented electrical steel sheet and the steel material according to this embodiment may contain the following elements as optional elements in addition to a part of Fe. The lower limit of the content in a case where the optional elements are not contained is 0%. The details of each optional element will be described below.

(0.000 to 0.400% of Sn, 0.000 to 0.400% of Sb, and 0.000 to 0.400% of P)

Sn and Sb improve the magnetic flux density of the non-oriented electrical steel sheet by improving a texture subjected to cold rolling and recrystallization. For this reason, these elements may be contained as necessary. In order to reliably obtain the effect, it is preferable that the content of even one of Sn and Sb is set to 0.020% or more. On the other hand, in a case where Sn and Sb are excessively contained, steel is embrittled. Accordingly, each of the Sn content and the Sb content is set to 0.400% or less.

Further, P may be contained to ensure the hardnes s of a steel sheet subjected to recrystallization. In order to reliably obtain this effect, it is preferable that the P content is set to 0.020% or more. On the other hand, in a case where P is excessively contained, the embrittlement of steel is caused. Accordingly, the P content is set to 0.400% or less.

(0.0000 to 0.0100% of Mg, Ca, Sr, Ba, Ce, La, Nd, Pr, Zn, and Cd in total)

Mg, Ca, Sr, Ba, Ce, La, Nd, Pr, Zn, and Cd react with S contained in molten steel during the casting of the molten steel, and create sulfide and/or oxysulfide. Hereinafter, Mg, Ca, Sr, Ba, Ce, La, Nd, Pr, Zn, and Cd may be collectively referred to as "coarse precipitate forming elements".

The grain size of the precipitates of the coarse precipitate forming elements is in the range of about 1 to 2 $\mu$m, and is much larger than the grain sizes (about 100 nm) of fine precipitates, such as MnS, TiN, or AlN. These fine precipitates adhere to the precipitate of the coarse precipitate forming elements, and are less likely to inhibit recrystallization and grain growth during annealing, such as first annealing (process annealing). In order to sufficiently obtain these effects, it is preferable that the total content of the coarse precipitate forming elements is 0.0005% or more. In order to sufficiently obtain the above-mentioned action, all of Mg, Ca, Sr, Ba, Ce, La, Nd, Pr, Zn, and Cd do not need to be contained and it is preferable that the content of any one of them is 0.0005% or more.

On the other hand, in a case where the total content of the coarse precipitate forming elements exceeds 0.0100%, a total amount of sulfide and/or oxysulfide is excessive and recrystallization and grain growth during annealing, such as the first annealing (process annealing), are inhibited. Accordingly, the total content of the coarse precipitate forming elements is set to 0.0100% or less.

The total content of Mg, Ca, Sr, Ba, Ce, La, Nd, Pr, Zn, and Cd is obtained from the calculation of the total value of the contents of Mg, Ca, Sr, Ba, Ce, La, Nd, Pr, Zn, and Cd.

The chemical composition of the non-oriented electrical steel sheet and the steel material according to this embodiment may be measured by a general analysis method. For example, the chemical composition of the non-oriented electrical steel sheet and the steel material according to this embodiment may be measured using inductively coupled plasma-atomic emission spectrometry (ICP-AES) or optical emission spectroscopy (OES). C and S may be measured using a combustion-infrared absorption method, and N may be measured using an inert gas fusion-thermal conductivity method. sol.Al may be measured by ICP-AES using a filtrate that is obtained in a case where a sample is decomposed with an acid by heating.

Next, the texture of the non-oriented electrical steel sheet according to this embodiment will be described. The non-oriented electrical steel sheet according to this embodiment has a chemical composition in which $\alpha$-$\gamma$ transformation may occur, and has a texture in which {100} grains are grown due to the refinement of crystal structure caused by rapid cooling immediately after the completion of the rolling of a final pass of finish rolling of hot rolling. Accordingly, for example, {100}<011> orientation integrated intensity of the non-oriented electrical steel sheet according to this embodiment is 5 or more, and the magnetic flux density B50 thereof in a direction inclined with respect to a rolling direction by 45° is particularly increased. In the non-oriented electrical steel sheet according to this embodiment, magnetic flux density is increased in a specific direction as described above but high magnetic flux density is obtained as a whole on the whole circumferential average in a sheet surface. In a case where {100}<011> orientation integrated intensity is less than 5, {111}<112> orientation integrated intensity reducing the magnetic flux density of the non-oriented electrical steel sheet is increased. As a result, magnetic flux density is reduced as a whole.

{100}<011> orientation integrated intensity can be measured by an X-ray diffraction method or an electron backscatter diffraction (EBSD) method. Since the angles of reflection and the like of X-rays and electron beams from a sample vary depending on each crystal orientation, crystal orientation intensity can be obtained from the reflection intensity or the like on the basis of a random orientation sample.

Next, the magnetic characteristics of the non-oriented electrical steel sheet according to this embodiment will be described. The magnetic characteristics of the non-oriented electrical steel sheet according to this embodiment are most excellent in two directions in which a smaller one of angles formed between the rolling direction and each of the two directions is 45°. On the other hand, the magnetic characteristics are worst in two directions in which angles formed between the rolling direction and the two directions are 0° and 90°. Here, 45° is a theoretical value, and it may not be easy to make the smaller one of the angles coincide with 45° in actual manufacturing. Accordingly, theoretically, in a case where directions in which the magnetic characteristics are most excellent are two directions in which a smaller one of angles formed between the rolling direction and each of the two directions is 45°, 45° also includes an angle that does not (exactly) coincides with 45° in an actual non-oriented electrical steel sheet. The same applies to the cases of 0° and 90°.

Further, the magnetic characteristics in the two directions in which the magnetic characteristics are most excellent are theoretically the same, but it may not be easy to make the magnetic characteristics in the two directions be the same in actual manufacturing. Accordingly, theoretically, in a case where the magnetic characteristics in the two directions in which the magnetic characteristics are most excellent are the same, "the same" also includes a case where the magnetic characteristics are not (exactly) the same. The same applies to the cases of two directions in which the magnetic characteristics are worst.

The above-mentioned angles are expressed to have positive values even in both a clockwise direction and a counterclockwise direction. In a case where the clockwise direction is defined as a negative direction and the counterclockwise direction is defined as a positive direction, the two directions in which a smaller one of angles formed between the above-mentioned rolling direction and each of the two directions is 45° are two directions in which angles, which have smaller absolute values, of angles formed between the above-mentioned rolling direction and the two directions are 45° and -45°.

The two directions in which a smaller one of angles formed between the above-mentioned rolling direction and each of the two directions is 45° can also be expressed as two directions in which angles formed between the rolling direction and the two directions are 45° and 135°.

In a case where the magnetic flux density of the non-oriented electrical steel sheet according to this embodiment is measured, the magnetic flux density B50 in a direction inclined with respect to the rolling direction by 45° is 1.660 T or more and the magnetic flux density B50 on the whole circumferential average (omnidirectional average) in a sheet surface is 1.605 T or more.

In addition, in a case where skin pass rolling and stress relief annealing to be described later are performed, magnetic characteristics are further improved, the magnetic flux density B50 in a direction inclined with respect to the rolling direction by 45° is 1.800 T or more, and the magnetic flux density B50 on the whole circumferential average (omnidirectional average) in a sheet surface is 1.650 T or more. Preferable magnetic characteristics obtained in a case where skin pass rolling and stress relief annealing are performed are that the magnetic flux density B50 in a direction inclined with respect to the rolling direction by 45° is 1.815 T or more and the magnetic flux density B50 on the whole circumferential average (omnidirectional average) in a sheet surface is 1.685 T or more.

In the non-oriented electrical steel sheet according to this embodiment, the magnetic flux density in a direction inclined with respect to the rolling direction by 45° is high but high magnetic flux density is obtained even on the whole circumferential average (omnidirectional average) in a sheet surface.

Samples of 55 mm square are cut out from the non-oriented electrical steel sheet in directions inclined with respect to the rolling direction by 45°, 0°, and the like and magnetic flux densities in a magnetic field of 5000 A/m are measured using a single-sheet magnetic measurement device, so that the magnetic flux density B50 is obtained. The magnetic flux density B50 on the whole circumferential average (omnidirectional average) is obtained from the calculation of the average value of the magnetic flux densities in directions that are inclined with respect to the rolling direction by 0°, 45°, 90°, and 135°.

An iron loss W10/400 is changed depending on the sheet thickness of the non-oriented electrical steel sheet. The iron loss W10/400 is reduced as the sheet thickness of the non-oriented electrical steel sheet is reduced.

In a case where the sheet thickness of the non-oriented electrical steel sheet according to this embodiment is in the range of 0.350 to 0.400 mm, the iron loss W10/400 is 19.00 W/kg or less. In a case where skin pass rolling and stress relief annealing to be described later are performed and a sheet thickness is in the range of 0.350 to 0.400 mm, the iron loss W10/400 becomes 16.00 W/kg or less.

Energy losses (W/kg) of the samples, which are obtained from the non-oriented electrical steel sheet, on the whole circumferential average, which are generated in a case where an AC magnetic field having a frequency of 400 Hz is applied so that the maximum magnetic flux density is 1.0 T, are measured using a single-sheet magnetic measurement device, so that iron losses W10/400 are obtained.

Next, the method for manufacturing a non-oriented electrical steel sheet according to this embodiment will be described. In the method for manufacturing a non-oriented electrical steel sheet according to this embodiment, hot rolling, first cold rolling, and first annealing (process annealing) are performed. Further, after the first annealing, second cold rolling (skin pass rolling) and/or second annealing (stress relief annealing) may be performed as necessary.

Specifically, the method for manufacturing a non-oriented electrical steel sheet according to this embodiment includes:

a step of obtaining a hot-rolled steel sheet by performing hot rolling on a steel material having the above-mentioned chemical composition;
a step of performing first cold rolling on the hot-rolled steel sheet;
a step of performing first annealing after the first cold rolling.

A final pass of finish rolling during the hot rolling is performed in a temperature range equal to or higher than an Ar1 temperature, and cooling of which an average cooling rate is in a range of 50 to 500°C/sec is started in 0.1 sec from completion of rolling of the final pass of the finish rolling and is performed up to a temperature range higher than 250°C and equal to or lower than 700°C.

In the method for manufacturing a non-oriented electrical steel sheet according to this embodiment, the first annealing is be performed in a temperature range lower than an Ac1 temperature.

The method for manufacturing a non-oriented electrical steel sheet according to this embodiment may further include a step of performing second cold rolling after the first annealing, cold rolling may be performed at a cumulative rolling reduction of 80 to 92% in the step of performing the first cold rolling, and cold rolling may be performed at a cumulative rolling reduction of 5 to 25% in the step of performing the second cold rolling.

The method for manufacturing a non-oriented electrical steel sheet according to this embodiment may further include a step of performing second annealing after the second cold rolling, and an annealing temperature may be set to be lower than an Ac1 temperature in the second annealing.

The details of each step will be described below.

First, a steel material having the above-mentioned chemical composition is heated and the hot rolling is performed. The steel material may be a slab that is manufactured by, for example, normal continuous casting. The rough rolling and finish rolling of the hot rolling are performed in a temperature range of a $\gamma$ range (equal to or higher than the Arl temperature). That is, the hot rolling is performed so that the finishing temperature of the finish rolling (the exit-side temperature of the final pass) is equal to or higher than the Ar1 temperature. Accordingly, austenite is transformed into ferrite by subsequent cooling, and crystal structure is refined. In a case where cold rolling is performed in a state where the crystal structure is refined, projection recrystallization (bulging) is likely to occur and {100} grains, which are less likely to be grown normally, can be easily grown. The upper limit of the finishing temperature is not particularly limited, but may be set to, for example, 950°C or less.

The heating temperature of the steel material may be set in the range of, for example, 1100 to 1250°C so that the finishing temperature of the finish rolling is equal to or higher than the Ar1 temperature.

In this embodiment, cooling of which an average cooling rate is in the range of 50 to 500°C/sec is started in 0.1 sec from the completion of the rolling of the final pass of the finish rolling. Further, this cooling is performed up to a temperature range higher than 250°C and equal to or lower than 700°C.

Water cooling is mainly used as a cooling method, but slurry and the like may be mixed to perform cooling and a cooling method is not particularly limited as long as cooling can be performed at the above-mentioned cooling rate.

Further, in this embodiment, the average cooling rate is a value that is obtained in a case where a temperature difference between the start of cooling (excluding air cooling) and the end of cooling is divided by an elapsed time from the start of cooling to the end of cooling.

Crystal structure is refined by the transformation of austenite into ferrite. However, in this embodiment, crystal structure is further refined by rapid cooling performed in 0.1 sec after the completion of the hot rolling (finish rolling). Since crystal structure is refined in this way, it is possible to cause bulging to be likely to occur through the subsequent cold rolling and the subsequent process annealing.

It is preferable that the above-mentioned cooling is performed in 0.0 sec after the completion of the rolling of the final pass of the finish rolling. Examples of a method of performing the above-mentioned cooling in 0.0 sec after the completion of the rolling of the final pass of the finish rolling include a method of jetting cooling water, which is to be jetted to a steel sheet ejected from the final pass of a finishing mill, so that the cooling water is applied to the exit side of the final pass of the finishing mill.

In this embodiment, a distance from the finishing mill to the start of water cooling and a sheet threading speed in that section are measured and "sheet threading distance/sheet threading speed" is calculated to obtain the time from the completion of the rolling of the final pass of the finish rolling to the start of cooling.

Since crystal structure is not sufficiently refined in a case where an average cooling rate is less than 50°C/sec in the cooling after the finish rolling, subsequent bulging also does not occur sufficiently. As a result, {100} grains are not sufficiently grown and the magnetic flux density of a non-oriented electrical steel sheet is not sufficiently increased. For this reason, an average cooling rate is set to 50°C/sec or more in the cooling after the finish rolling. Preferably, an average cooling rate is 70°C/sec or more or 90°C/sec or more.

On the other hand, considering hot rolling equipment, it is difficult to set an average cooling rate to a value larger than 500°C/sec in the cooling after the finish rolling. For this reason, an average cooling rate is set to 500°C/sec or less in the cooling after the finish rolling. Preferably, an average cooling rate is 400°C/sec or less or 300°C/sec or less.

Cooling, which is performed after the finish rolling and of which an average cooling rate is in the range of 50 to 500°C/sec, is performed up to a temperature range higher than 250°C and equal to or lower than 700°C. Preferably, the cooling is performed in a temperature range equal to or lower than 600°C. In a case where the cooling is performed up to a temperature range equal to or lower than 700°C, transformation into ferrite from austenite is completed.

In a case where the stop temperature of the cooling, which is performed after the finish rolling and of which an average cooling rate is in the range of 50 to 500°C/sec, is 250°C or less, recrystallization does not occur after the completion of the finish rolling and processed grains remain. Accordingly, crystal structure cannot be sufficiently refined. For this reason, the above-mentioned cooling is performed up to a temperature range higher than 250°C. The above-mentioned winding temperature is preferably 300°C or more or 400°C or more.

After cooling is performed up to a temperature range higher than 250°C and equal to or lower than 700°C, a steel sheet is wound in the form of a coil without being subjected to air cooling, slow cooling, and hot-rolled sheet annealing. A temperature at which cooling is to be stopped is substantially a coil winding temperature. After the steel sheet is wound in the form of a coil, the coil may be rewound and pickling may be performed as necessary. After the coil is rewound or after pickling is performed, the first cold rolling is performed on the hot-rolled steel sheet.

It is preferable that a cumulative rolling reduction is set in the range of 80 to 92% in the first cold rolling. As a cumulative rolling reduction is higher, {100} grains are more likely to be grown by subsequent bulging but it is difficult to wind the hot-rolled steel sheet. For this reason, an operation is likely to be difficult to be performed. In a case where a cumulative rolling reduction in the first cold rolling is set in the above-mentioned range, the growth of {100} grains, which is due to the subsequent bulging, can be preferably controlled.

The cumulative rolling reduction mentioned here is represented by $(1 - t_1/t_0) \times 100(\%)$ using a sheet thickness $t_0$ of the hot-rolled steel sheet that is not yet subjected to the first cold rolling and a sheet thickness $t_1$ of the steel sheet (cold-rolled steel sheet) that has been subjected to the first cold rolling.

The first annealing (process annealing) is performed after the first cold rolling. In this embodiment, it is preferable that the process annealing is performed in a temperature range where the transformation into austenite from ferrite does not occur. That is, the temperature of the first annealing is set to be lower than the Ac1 temperature. In a case where the first annealing is performed under such a condition, bulging occurs and {100} grains are likely to be grown. Further, it is preferable that the annealing time of the first annealing (a holding time in a temperature range lower than the Ac1 temperature) is set in the range of 5 to 60 sec. Furthermore, it is preferable that the first annealing is performed at 600°C or more, and it is preferable that the first annealing is performed in a non-oxidizing atmosphere.

A non-oriented electrical steel sheet can be manufactured by the method having been described above.

It is preferable that the second cold rolling (skin pass rolling) is performed after the first annealing is performed. In a case where the cold rolling is performed in a state where bulging occurs as described above, {100} grains are further grown from a portion where the bulging has occurred as a starting point. It is preferable that a cumulative rolling reduction in the second cold rolling is set in the range of 5 to 25%. In a case where a cumulative rolling reduction in the second cold rolling is set in the range of 5 to 25%, {100} grains can be preferably grown.

The cumulative rolling reduction mentioned here is represented by $(1 - t_1/t_0) \times 100(\%)$ using a sheet thickness $t_0$ of the non-oriented electrical steel sheet that is not yet subjected to the second cold rolling and a sheet thickness $t_1$ of the non-oriented electrical steel sheet that has been subjected to the second cold rolling.

It is preferable that the second annealing is performed after the second cold rolling is performed. It is preferable that an annealing temperature is set to be lower than the Ac1 temperature in the second annealing. In a case where the second annealing is performed under such a condition, {100} grains can be selectively coarsened. Accordingly, the magnetic flux density of the non-oriented electrical steel sheet can be further increased.

Strain is less likely to be accumulated in {100} grains having excellent magnetic characteristics, and strain is likely to be accumulated in {111} grains having bad magnetic characteristics. In a case where the annealing is performed after the second cold rolling is performed, {100} grains having less strain encroach {111} grains by using a difference in strain as a driving force. Accordingly, {100} grains are further grown. This encroachment phenomenon, which is caused by using a difference in strain as a driving force, is called strain-induced grain boundary migration (SIBM).

As the second annealing, short-time annealing (final annealing) may be performed, long-time annealing (stress relief annealing) may be performed, or both the short-time annealing and the long-time annealing may be performed. In a case where the short-time annealing is performed, it is preferable that annealing is performed for 1 hour or less in a temperature range lower than the Ac1 temperature. In a case where the long-time annealing is performed, it is preferable that annealing is performed for 1 hour or more at a temperature lower than the Ac1 temperature. In a case where the long-time annealing is performed, an effect of removing strain caused by punching and an effect of selectively coarsening {100} grains can be obtained.

In a case where both the short-time annealing and the long-time annealing are performed, it is preferable that the long-time annealing is performed after the short-time annealing.

In this embodiment, the Ar1 temperature is obtained from a change in the thermal expansion of a steel material (steel sheet) that is being cooled at an average cooling rate of 1°C/sec. Further, in this embodiment, the Ac1 temperature is obtained from a change in the thermal expansion of a steel material (steel sheet) that is being heated at an average heating rate of 1°C/sec.

[Examples]

Next, the method for manufacturing a non-oriented electrical steel sheet according to the embodiment of the invention will be specifically described with reference to examples. Examples to be described below are merely examples of the method for manufacturing a non-oriented electrical steel sheet according to the embodiment of the invention, and the method for manufacturing a non-oriented electrical steel sheet according to the embodiment of the invention is not limited to the following examples.

(First example)

Molten steel was casted to produce slabs having chemical compositions shown in Table 1 to be described below. The left side of Expression shown in Table 1 represents the value of the left side of Expression (1) having been described above. After that, the produced slabs were heated up to 1150°C and were subjected to hot rolling under conditions shown in Table 2, so that hot-rolled steel sheets having a sheet thickness of 2.5 mm were obtained. Water cooling was performed after finish rolling, and the steel sheets were wound after the water cooling was stopped at winding temperatures shown in Table 2.

The exit-side temperature (finishing temperature) of the final pass of the finish rolling, the time from the completion of the rolling of the final pass of the finish rolling to the start of cooling (the start of water cooling), an average cooling rate, and a winding temperature are shown in Table 2. A distance from a finishing mill to the start of water cooling and a sheet threading speed in that section were measured and "sheet threading distance/sheet threading speed" was calculated to obtain the time from the completion of the rolling of the final pass of the finish rolling to the start of cooling. Here, a fact that the time from the completion of the rolling of the final pass of the finish rolling to the start of cooling was 0.0 sec means that cooling was performed so that cooling water was applied to the exit side of the final pass of the finishing mill.

Then, pickling was performed on the obtained hot-rolled steel sheets to remove scale. After that, cold rolling was performed at a cumulative rolling reduction of 85% until a sheet thickness reached 0.385 mm, so that steel sheets (cold-rolled steel sheets) were obtained. First annealing (process annealing) for heating the obtained steel sheets and holding the steel sheets for 5 to 60 sec at 700°C, which was a temperature lower than the Ac1 temperatures of all the steel sheets, in a non-oxidizing atmosphere was performed. Then, second cold rolling (skin pass rolling) was performed at a cumulative rolling reduction of 9% until a sheet thickness reached 0.35 mm.

The Ar1 temperature was obtained from a change in the thermal expansion of the steel sheet that was being cooled at an average cooling rate of 1°C/sec, and the Ac1 temperature was obtained from a change in the thermal expansion of the steel sheet that was being heated at an average heating rate of 1°C/sec.

After the second cold rolling (skin pass rolling) was performed, second annealing (stress relief annealing) for heating the steel sheets for 2 hours at 800°C was performed. 800°C was a temperature lower than the Ac1 temperatures of all the steel sheets.

After the second annealing was performed, magnetic flux densities B50 were measured using a single-sheet magnetic measurement device. Samples of 55 mm square were taken in two directions that were inclined with respect to the rolling directions of the steel sheets by 0° and 45°, and magnetic flux densities B50 were measured. The magnetic flux density in the direction inclined with respect to the rolling direction by 45° was referred to as the magnetic flux density B50 in a 45° direction. The whole circumferential average of the magnetic flux densities B50 was obtained from the calculation of an average value of the magnetic flux densities in directions inclined with respect to the rolling direction by 0°, 45°, 90°, and 135°.

Further, energy losses (W/kg) of the samples, which were obtained from the non-oriented electrical steel sheets, on the whole circumferential average, which were generated in a case where an AC magnetic field having a frequency of 400 Hz was applied so that the maximum magnetic flux density was 1.0 T, were measured, so that iron losses W10/400 were obtained.

[Table 1]

| No. | Chemical composition (mass%) Remainder iron and impurities | | | | | | | | | | | | |
| | C | Si | sol-Al | S | N | Mn | Ni | Co | Pt | Pb | Cu | Au | Left side of Expression |
|-----|--------|------|--------|--------|--------|------|------|------|------|------|------|------|----------------------------|
| 101 | 0.0009 | 2.50 | 0.012 | 0.0023 | 0.0024 | 3.07 | --- | --- | --- | --- | --- | --- | 0.55 |
| 102 | 0.0014 | 2.52 | 0.009 | 0.0020 | 0.0023 | --- | 3.11 | --- | --- | --- | --- | --- | 0.59 |
| 103 | 0.0011 | 2.52 | 0.012 | 0.0023 | 0.0020 | --- | --- | 3.08 | --- | --- | --- | --- | 0.54 |
| 104 | 0.0012 | 2.53 | 0.008 | 0.0024 | 0.0017 | --- | --- | --- | 3.10 | --- | --- | --- | 0.57 |
| 105 | 0.0009 | 2.52 | 0.008 | 0.0019 | 0.0022 | --- | --- | --- | --- | 3.10 | --- | --- | 0.58 |
| 106 | 0.0011 | 2.49 | 0.010 | 0.0021 | 0.0023 | --- | --- | --- | --- | --- | 3.12 | --- | 0.62 |
| 107 | 0.0007 | 2.50 | 0.007 | 0.0022 | 0.0023 | --- | --- | --- | --- | --- | --- | 3.06 | 0.55 |
| 108 | 0.0009 | 2.50 | 0.013 | 0.0020 | 0.0018 | 3.10 | --- | --- | --- | --- | --- | --- | 0.59 |
| 109 | 0.0006 | 2.50 | 0.010 | 0.0018 | 0.0018 | 3.09 | --- | --- | --- | --- | --- | --- | 0.59 |
| 110 | 0.0012 | 2.47 | 0.009 | 0.0020 | 0.0023 | 3.10 | --- | --- | --- | --- | --- | --- | 0.62 |
| 111 | 0.0013 | 2.49 | 0.012 | 0.0020 | 0.0018 | 3.11 | --- | --- | --- | --- | --- | --- | 0.60 |
| 112 | 0.0010 | 2.48 | 0.009 | 0.0016 | 0.0016 | 3.11 | --- | --- | --- | --- | --- | --- | 0.62 |
| 113 | 0.0010 | 2.49 | 0.010 | 0.0017 | 0.0024 | 3.11 | --- | --- | --- | --- | --- | --- | 0.61 |
| 114 | 0.0006 | 2.48 | 0.012 | 0.0018 | 0.0018 | 3.11 | --- | --- | --- | --- | --- | --- | 0.61 |
| 115 | 0.0009 | 2.51 | 0.012 | 0.0024 | 0.0021 | 3.08 | --- | --- | --- | --- | --- | --- | 0.56 |
| 116 | 0.0011 | 2.50 | 0.321 | 0.0020 | 0.0024 | 3.42 | --- | --- | --- | --- | --- | --- | 0.59 |
| 117 | 0.0012 | 2.51 | 0.612 | 0.0021 | 0.0023 | 3.73 | --- | --- | --- | --- | --- | --- | 0.61 |
| 118 | 0.0012 | 2.50 | 0.010 | 0.0019 | 0.0023 | 3.10 | --- | --- | --- | --- | --- | --- | 0.59 |
| 119 | 0.0011 | 2.51 | 0.011 | 0.0022 | 0.0021 | 3.11 | --- | --- | --- | --- | --- | --- | 0.59 |

[Table 2]

| No. | Hot rolling conditions | | | | | Magnetic characteristics after annealing performed for 2 hours at 800°C | | | Note |
|-----|------------------------|------|------|------|------|------|------|------|------|
| | Finishing temperature (°C) | Ar1 (°C) | Time from finishing to start of cooling (s) | Average cooling rate (°C/s) | Winding temperature (°C) | B50 in 45° direction (T) | B50 on whole circumferential average (T) | W10/400 (W/kg) | |
| 101 | 800 | 780 | 0.0 | 100 | 500 | 1.827 | 1.704 | 15.22 | Example of invention |
| 102 | 800 | 780 | 0.0 | 100 | 500 | 1.831 | 1.701 | 14.90 | Example of invention |
| 103 | 800 | 780 | 0.0 | 100 | 500 | 1.833 | 1.696 | 14.96 | Example of invention |
| 104 | 800 | 780 | 0.0 | 100 | 500 | 1.834 | 1.702 | 14.92 | Example of invention |
| 105 | 800 | 780 | 0.0 | 100 | 500 | 1.829 | 1.697 | 15.18 | Example of invention |
| 106 | 800 | 780 | 0.0 | 100 | 500 | 1.832 | 1.702 | 15.12 | Example of invention |
| 107 | 800 | 780 | 0.0 | 100 | 500 | 1.832 | 1.697 | 15.16 | Example of invention |
| 108 | 800 | 780 | 0.07 | 100 | 500 | 1.822 | 1.693 | 15.14 | Example of invention |
| 109 | 800 | 780 | 0.3 | 100 | 500 | 1.811 | 1.680 | 16.03 | Comparative Example |
| 110 | 800 | 780 | 0.6 | 100 | 500 | 1.812 | 1.677 | 16.40 | Comparative Example |
| 111 | 800 | 780 | 1.0 | 100 | 500 | 1.808 | 1.681 | 16.28 | Comparative Example |
| 112 | 800 | 780 | 0.0 | 50 | 500 | 1.819 | 1.689 | 15.29 | Example of invention |
| 113 | 800 | 780 | 0.0 | 30 | 500 | 1.810 | 1.684 | 16.10 | Comparative Example |
| 114 | 800 | 780 | 0.0 | 200 | 500 | 1.830 | 1.703 | 15.20 | Example of invention |
| 115 | 800 | 780 | 0.0 | 100 | 240 | 1.813 | 1.679 | 16.03 | Comparative Example |
| 116 | 800 | 780 | 0.0 | 100 | 500 | 1.825 | 1.691 | 14.64 | Example of invention |
| 117 | 800 | 780 | 0.0 | 100 | 500 | 1.818 | 1.688 | 14.11 | Example of invention |
| 118 | 800 | 780 | 0.0 | 100 | 400 | 1.826 | 1.694 | 15.32 | Example of invention |
| 119 | 800 | 780 | 0.0 | 100 | 650 | 1.827 | 1.693 | 15.34 | Example of invention |

Underlines shown in Table 2 represent conditions out of the scope of the invention. Magnetic characteristics excellent both in the 45° direction and on the whole circumferential average (high magnetic flux densities B50 and low iron losses W10/400) were obtained from Nos. 101 to 108, Nos. 112 and 114, and Nos. 116 to 119 that were the examples of the invention.

On the other hand, since Nos. 109 to 111, which were comparative examples, had a long time from the completion of the rolling of the final pass of the finish rolling to the start of cooling ("the time from the finishing to the start of cooling" in Table 1), Nos. 109 to 111 had low magnetic flux densities B50 and high iron losses W10/400. As a result, the magnetic characteristics of Nos. 109 to 111 were poorer than those of the examples of the invention. Since No. 113, which was a comparative example, had a low average cooling rate, No. 113 had a magnetic flux density B50 lower than the magnetic flux densities B50 of the examples of the invention and an iron loss W10/400 higher than the iron losses W10/400 of the examples of the invention. As a result, the magnetic characteristics of No. 113 were poorer than those of the examples of the invention. Since No. 115, which was a comparative example, had a low winding temperature (a temperature at which cooling was to be stopped), No. 115 had a magnetic flux density B50 lower than the magnetic flux densities B50 of the examples of the invention and an iron loss W10/400 higher than the iron losses W10/400 of the examples of the invention. As a result, the magnetic characteristics of No. 115 were poorer than those of the examples of the invention.

(Second example)

Molten steel was casted to produce slabs having chemical compositions shown in Table 3 to be described below. After that, the produced ingots were heated up to 1150°C and were subjected to hot rolling under conditions shown in Table 4, so that hot-rolled steel sheets having a sheet thickness of 2.5 mm were obtained. Water cooling was performed after finish rolling, and the steel sheets were wound after the water cooling was stopped at winding temperatures shown in Table 2.

Since items shown in Table 4 are the same as those described in Example 1, the description thereof will be omitted.

Then, pickling was performed on the obtained hot-rolled steel sheets to remove scale. After that, cold rolling was performed at a cumulative rolling reduction of 85% until a sheet thickness reached 0.385 mm, so that steel sheets (cold-rolled steel sheets) were obtained. First annealing (process annealing) for heating the obtained steel sheets and holding the steel sheets for 5 to 60 sec at 700°C, which was a temperature lower than the Ac1 temperatures of all the steel sheets, in a non-oxidizing atmosphere was performed. Then, second cold rolling (skin pass rolling) was performed at a cumulative rolling reduction of 9% until a sheet thickness reached 0.35 mm.

After the second cold rolling (skin pass rolling) was performed, second annealing (stress relief annealing) for heating the steel sheets for 2 hours at 800°C was performed. 800°C was a temperature lower than the Ac1 temperatures of all the steel sheets.

After the second annealing was performed, magnetic flux densities B50 and iron losses W10/400 were measured using a single-sheet magnetic measurement device. The measurement was performed in the same procedure as in the first example. Further, the Ar1 temperatures and the Ac1 temperatures were measured by the same methods as in the first example.

[Table 3]

| No. | \multicolumn{21}{c}{Chemical composition (mass%)   Remainder iron and impurities} |
|---|---|---|---|---|---|---|---|---|---|---|---|---|---|---|---|---|---|---|---|---|
| | C | Si | sol-Al | S | N | Mn | Sn | Sb | P | Mg | Ca | Sr | Ba | Ce | La | Nd | Pr | Zn | Cd | Left side of Expression |
| 201 | 0.0010 | 2.52 | 0.007 | 0.0019 | 0.0016 | 3.11 | --- | --- | --- | --- | --- | --- | --- | --- | --- | --- | --- | --- | --- | 0.58 |
| 202 | 0.0007 | 2.49 | 0.012 | 0.0024 | 0.0018 | 3.14 | 0.051 | --- | --- | --- | --- | --- | --- | --- | --- | --- | --- | --- | --- | 0.64 |
| 203 | 0.0012 | 2.51 | 0.013 | 0.0021 | 0.0022 | 3.09 | --- | 0.053 | --- | --- | --- | --- | --- | --- | --- | --- | --- | --- | --- | 0.57 |
| 204 | 0.0009 | 2.52 | 0.013 | 0.0023 | 0.0019 | 3.12 | --- | --- | 0.049 | --- | --- | --- | --- | --- | --- | --- | --- | --- | --- | 0.59 |
| 205 | 0.0010 | 2.53 | 0.013 | 0.0017 | 0.0022 | 3.13 | --- | --- | --- | 0.0051 | --- | --- | --- | --- | --- | --- | --- | --- | --- | 0.59 |
| 206 | 0.0009 | 2.52 | 0.011 | 0.0017 | 0.0018 | 3.11 | --- | --- | --- | --- | 0.0047 | --- | --- | --- | --- | --- | --- | --- | --- | 0.58 |
| 207 | 0.0014 | 2.54 | 0.011 | 0.0023 | 0.0020 | 3.12 | --- | --- | --- | --- | --- | 0.0047 | --- | --- | --- | --- | --- | --- | --- | 0.57 |
| 208 | 0.0013 | 2.53 | 0.007 | 0.0022 | 0.0021 | 3.11 | --- | --- | --- | --- | --- | --- | 0.0052 | --- | --- | --- | --- | --- | --- | 0.58 |
| 209 | 0.0007 | 2.46 | 0.007 | 0.0020 | 0.0017 | 3.13 | --- | --- | --- | --- | --- | --- | --- | 0.0051 | --- | --- | --- | --- | --- | 0.67 |
| 210 | 0.0013 | 2.50 | 0.011 | 0.0023 | 0.0019 | 3.12 | --- | --- | --- | --- | --- | --- | --- | --- | 0.0053 | --- | --- | --- | --- | 0.60 |
| 211 | 0.0011 | 2.48 | 0.013 | 0.0017 | 0.0019 | 3.08 | --- | --- | --- | --- | --- | --- | --- | --- | --- | 0.0051 | --- | --- | --- | 0.58 |
| 212 | 0.0014 | 2.46 | 0.007 | 0.0016 | 0.0022 | 3.12 | --- | --- | --- | --- | --- | --- | --- | --- | --- | --- | 0.0053 | --- | --- | 0.64 |
| 213 | 0.0011 | 2.48 | 0.012 | 0.0019 | 0.0017 | 3.13 | --- | --- | --- | --- | --- | --- | --- | --- | --- | --- | --- | 0.0049 | --- | 0.64 |
| 214 | 0.0008 | 2.54 | 0.008 | 0.0023 | 0.0023 | 3.11 | --- | --- | --- | --- | --- | --- | --- | --- | --- | --- | --- | --- | 0.0051 | 0.57 |
| 215 | 0.0008 | 2.49 | 0.320 | 0.0020 | 0.0018 | 3.43 | 0.049 | --- | --- | --- | --- | --- | --- | --- | --- | --- | --- | --- | --- | 0.62 |
| 216 | 0.0010 | 2.50 | 0.610 | 0.0023 | 0.0019 | 3.71 | 0.051 | --- | --- | --- | --- | --- | --- | --- | --- | --- | --- | --- | --- | 0.60 |

[Table 4]

| No. | Hot rolling conditions | | | | | Magnetic characteristics after annealing performed for 2 hours at 800°C | | | Note |
|---|---|---|---|---|---|---|---|---|---|
| | Finishing temperature (°C) | Ar1 (°C) | Time from finishing to start of cooling (s) | Average cooling rate (°C/s) | Winding temperature (°C) | B50 in 45° direction (T) | B50 on whole circumferential average (T) | W10/400 (W/kg) | |
| 201 | 800 | 780 | 0.0 | 100 | 500 | 1.830 | 1.699 | 15.13 | Example of invention |
| 202 | 800 | 780 | 0.0 | 100 | 500 | 1.836 | 1.710 | 15.11 | Example of invention |
| 203 | 800 | 780 | 0.0 | 100 | 500 | 1.842 | 1.707 | 15.09 | Example of invention |
| 204 | 800 | 780 | 0.0 | 100 | 500 | 1.841 | 1.709 | 15.07 | Example of invention |
| 205 | 800 | 780 | 0.0 | 100 | 500 | 1.833 | 1.696 | 14.74 | Example of invention |
| 206 | 800 | 780 | 0.0 | 100 | 500 | 1.827 | 1.704 | 14.70 | Example of invention |
| 207 | 800 | 780 | 0.0 | 100 | 500 | 1.826 | 1.701 | 14.69 | Example of invention |

(continued)

| No. | Hot rolling conditions | | | | | Magnetic characteristics after annealing performed for 2 hours at 800°C | | | Note |
|---|---|---|---|---|---|---|---|---|---|
| | Finishing temperature (°C) | Ar1 (°C) | Time from finishing to start of cooling (s) | Average cooling rate (°C/s) | Winding temperature (°C) | B50 in 45° direction (T) | B50 on whole circumferential average (T) | W10/400 (W/kg) | |
| 208 | 800 | 780 | 0.0 | 100 | 500 | 1.827 | 1.696 | 14.71 | Example of invention |
| 209 | 800 | 780 | 0.0 | 100 | 500 | 1.831 | 1.703 | 14.69 | Example of invention |
| 210 | 800 | 780 | 0.0 | 100 | 500 | 1.826 | 1.703 | 14.69 | Example of invention |
| 211 | 800 | 780 | 0.0 | 100 | 500 | 1.826 | 1.704 | 14.70 | Example of invention |
| 212 | 800 | 780 | 0.0 | 100 | 500 | 1.829 | 1.699 | 14.72 | Example of invention |
| 213 | 800 | 780 | 0.0 | 100 | 500 | 1.827 | 1.697 | 14.68 | Example of invention |
| 214 | 800 | 780 | 0.0 | 100 | 500 | 1.833 | 1.696 | 14.70 | Example of invention |
| 215 | 800 | 780 | 0.0 | 100 | 500 | 1.829 | 1.705 | 14.62 | Example of invention |
| 216 | 800 | 780 | 0.0 | 100 | 500 | 1.821 | 1.691 | 14.22 | Example of invention |

Nos. 201 to 216 were examples of the invention, and all of them had good magnetic characteristics. In particular, the magnetic flux densities B50 of Nos. 202 to 204 were higher than those of No. 201 and Nos. 205 to 214, and the iron losses W10/400 of Nos. 205 to 214 were lower than those of Nos. 201 to 204. The iron losses W10/400 of Nos. 215 and 216 having high sol.Al contents were lower than that of No. 201, and the magnetic flux densities B50 of Nos. 215 and 216 were lower than that of No. 201.

(Third example)

Molten steel was casted to produce slabs having chemical compositions shown in Table 5 to be described below. After that, the produced ingots were heated up to 1150°C and were subjected to hot rolling under conditions shown in Table 6, so that hot-rolled steel sheets having a sheet thickness of 2.5 mm were obtained. Water cooling was performed after finish rolling, and the steel sheets were wound after the water cooling was stopped at winding temperatures shown in Table 6.

Since items shown in Table 6 are the same as those described in Example 1, the description thereof will be omitted.

Then, pickling was performed on the obtained hot-rolled steel sheets to remove scale. After that, cold rolling was performed at a cumulative rolling reduction of 85% until a sheet thickness reached 0.385 mm, so that steel sheets (cold-rolled steel sheets) were obtained. First annealing (process annealing) for heating the obtained steel sheets and holding the steel sheets for 5 to 60 sec at 700°C, which was a temperature lower than the Ac1 temperatures of all the steel sheets, in a non-oxidizing atmosphere was performed.

After the first annealing was performed, magnetic flux densities B50 and iron losses W10/400 were measured using a single-sheet magnetic measurement device. The measurement was performed in the same procedure as in the first example. Further, the Ar1 temperatures and the Ac1 temperatures were measured by the same methods as in the first example.

[Table 5]

| No. | Chemical composition (mass%)  Remainder iron and impurities | | | | | | | | | | | | | Left side of Expression |
| | C | Si | sol-Al | S | N | Mn | Ni | Co | Pt | Pb | Cu | Au | Others | |
|-----|--------|------|--------|--------|--------|------|------|------|------|------|------|------|----------|------|
| 301 | 0.0009 | 2.51 | 0.012 | 0.0019 | 0.0021 | 3.10 | --- | --- | --- | --- | --- | --- | --- | 0.55 |
| 302 | 0.0009 | 2.51 | 0.009 | 0.0019 | 0.0022 | --- | 3.11 | --- | --- | --- | --- | --- | --- | 0.59 |
| 303 | 0.0009 | 2.49 | 0.011 | 0.0022 | 0.0022 | --- | --- | 3.11 | --- | --- | --- | --- | --- | 0.54 |
| 304 | 0.0008 | 2.50 | 0.011 | 0.0021 | 0.0021 | --- | --- | --- | 3.10 | --- | --- | --- | --- | 0.57 |
| 305 | 0.0011 | 2.50 | 0.012 | 0.0020 | 0.0018 | --- | --- | --- | --- | 3.10 | --- | --- | --- | 0.58 |
| 306 | 0.0011 | 2.50 | 0.010 | 0.0021 | 0.0020 | --- | --- | --- | --- | --- | 3.09 | --- | --- | 0.62 |
| 307 | 0.0009 | 2.49 | 0.011 | 0.0018 | 0.0018 | --- | --- | --- | --- | --- | --- | 3.08 | --- | 0.55 |
| 308 | 0.0010 | 2.51 | 0.012 | 0.0020 | 0.0020 | 3.12 | --- | --- | --- | --- | --- | --- | --- | 0.59 |
| 309 | 0.0010 | 2.51 | 0.011 | 0.0020 | 0.0020 | 3.11 | --- | --- | --- | --- | --- | --- | --- | 0.59 |
| 310 | 0.0011 | 2.50 | 0.012 | 0.0021 | 0.0019 | 3.10 | --- | --- | --- | --- | --- | --- | --- | 0.62 |
| 311 | 0.0009 | 2.50 | 0.010 | 0.0019 | 0.0018 | 3.10 | --- | --- | --- | --- | --- | --- | --- | 0.60 |
| 312 | 0.0009 | 2.51 | 0.011 | 0.0019 | 0.0020 | 3.08 | --- | --- | --- | --- | --- | --- | --- | 0.62 |
| 313 | 0.0012 | 2.49 | 0.011 | 0.0021 | 0.0018 | 3.10 | --- | --- | --- | --- | --- | --- | --- | 0.61 |
| 314 | 0.0012 | 2.51 | 0.008 | 0.0018 | 0.0019 | 3.09 | --- | --- | --- | --- | --- | --- | --- | 0.61 |
| 315 | 0.0011 | 2.51 | 0.010 | 0.0020 | 0.0018 | 3.08 | --- | --- | --- | --- | --- | --- | --- | 0.56 |
| 316 | 0.0008 | 2.50 | 0.322 | 0.0019 | 0.0019 | 3.31 | --- | --- | --- | --- | --- | --- | --- | 0.59 |
| 317 | 0.0008 | 2.50 | 0.609 | 0.0020 | 0.0018 | 3.71 | --- | --- | --- | --- | --- | --- | --- | 0.59 |
| 318 | 0.0011 | 2.49 | 0.011 | 0.0019 | 0.0021 | 3.10 | --- | --- | --- | --- | --- | --- | Sn:0.05 | 0.59 |
| 319 | 0.0010 | 2.49 | 0.009 | 0.0018 | 0.0020 | 3.09 | --- | --- | --- | --- | --- | --- | Sb:0.05 | 0.59 |
| 320 | 0.0011 | 2.48 | 0.011 | 0.0021 | 0.0021 | 3.09 | --- | --- | --- | --- | --- | --- | P:0.05 | 0.59 |
| 321 | 0.0009 | 2.52 | 0.011 | 0.0021 | 0.0021 | 3.11 | --- | --- | --- | --- | --- | --- | Mg:0.005 | 0.59 |
| 322 | 0.0011 | 2.50 | 0.009 | 0.0018 | 0.0019 | 3.11 | --- | --- | --- | --- | --- | --- | Ca:0.005 | 0.59 |
| 323 | 0.0011 | 2.49 | 0.010 | 0.0020 | 0.0021 | 3.10 | --- | --- | --- | --- | --- | --- | Ba:0.005 | 0.59 |
| 324 | 0.0008 | 2.52 | 0.009 | 0.0022 | 0.0020 | 3.11 | --- | --- | --- | --- | --- | --- | Ce:0.005 | 0.59 |
| 325 | 0.0011 | 2.51 | 0.012 | 0.0019 | 0.0019 | 3.09 | --- | --- | --- | --- | --- | --- | La:0.005 | 0.59 |

| No. | Chemical composition (mass%)　　Remainder iron and impurities | | | | | | | | | | | | | |
| | C | Si | sol-Al | S | N | Mn | Ni | Co | Pt | Pb | Cu | Au | Others | Left side of Expression |
|---|---|---|---|---|---|---|---|---|---|---|---|---|---|---|
| 326 | 0.0010 | 2.48 | 0.010 | 0.0022 | 0.0018 | 3.12 | --- | --- | --- | --- | --- | --- | Nd:0.005 | 0.59 |

[Table 6]

| No. | Hot rolling conditions | | | | | Magnetic characteristics | | | Note |
|---|---|---|---|---|---|---|---|---|---|
| | Finishing temperature (°C) | Ar1 (°C) | Time from finishing to start of cooling (s) | Average cooling rate (°C/s) | Winding temperature (°C) | B50 in 45° direction (T) | B50 on whole circumferential average (T) | W10/400 (W/kg) | |
| 301 | 800 | 780 | 0.0 | 100 | 500 | 1.671 | 1.617 | 18.19 | Example of invention |
| 302 | 800 | 780 | 0.0 | 100 | 500 | 1.671 | 1.622 | 18.23 | Example of invention |
| 303 | 800 | 780 | 0.0 | 100 | 500 | 1.672 | 1.621 | 18.17 | Example of invention |
| 304 | 800 | 780 | 0.0 | 100 | 500 | 1.671 | 1.622 | 18.24 | Example of invention |
| 305 | 800 | 780 | 0.0 | 100 | 500 | 1.673 | 1.622 | 18.20 | Example of invention |
| 306 | 800 | 780 | 0.0 | 100 | 500 | 1.669 | 1.616 | 18.22 | Example of invention |
| 307 | 800 | 780 | 0.0 | 100 | 500 | 1.672 | 1.622 | 18.22 | Example of invention |
| 308 | 800 | 780 | 0.07 | 100 | 500 | 1.661 | 1.608 | 18.62 | Example of invention |
| 309 | 800 | 780 | 0.3 | 100 | 500 | 1.653 | 1.604 | 19.49 | Comparative Example |
| 310 | 800 | 780 | 0.6 | 100 | 500 | 1.648 | 1.597 | 19.53 | Comparative Example |
| 311 | 800 | 780 | 1.0 | 100 | 500 | 1.654 | 1.597 | 19.49 | Comparative Example |
| 312 | 800 | 780 | 0.0 | 50 | 500 | 1.662 | 1.608 | 18.62 | Example of invention |
| 313 | 800 | 780 | 0.0 | 30 | 500 | 1.651 | 1.604 | 19.48 | Comparative Example |
| 314 | 800 | 780 | 0.0 | 200 | 500 | 1.671 | 1.618 | 18.22 | Example of invention |
| 315 | 800 | 780 | 0.0 | 100 | 240 | 1.651 | 1.600 | 19.50 | Comparative Example |
| 316 | 800 | 780 | 0.07 | 100 | 500 | 1.667 | 1.618 | 18.22 | Example of invention |
| 317 | 800 | 780 | 0.07 | 100 | 500 | 1.668 | 1.622 | 18.23 | Example of invention |
| 318 | 800 | 780 | 0.07 | 100 | 500 | 1.679 | 1.631 | 18.24 | Example of invention |
| 319 | 800 | 780 | 0.07 | 100 | 500 | 1.676 | 1.627 | 18.17 | Example of invention |
| 320 | 800 | 780 | 0.07 | 100 | 400 | 1.672 | 1.631 | 18.32 | Example of invention |
| 321 | 800 | 780 | 0.07 | 100 | 500 | 1.666 | 1.623 | 17.20 | Example of invention |
| 322 | 800 | 780 | 0.07 | 100 | 600 | 1.661 | 1.617 | 17.34 | Example of invention |
| 323 | 800 | 780 | 0.07 | 100 | 500 | 1.666 | 1.617 | 17.16 | Example of invention |
| 324 | 800 | 780 | 0.07 | 100 | 500 | 1.669 | 1.621 | 17.17 | Example of invention |

(continued)

| No. | Hot rolling conditions | | | | | Magnetic characteristics | | | Note |
|---|---|---|---|---|---|---|---|---|---|
| | Finishing temperature (°C) | Ar1 (°C) | Time from finishing to start of cooling (s) | Average cooling rate (°C/s) | Winding temperature (°C) | B50 in 45° direction (T) | B50 on whole circumferential average (T) | W10/400 (W/kg) | |
| 325 | 800 | 780 | 0.07 | 100 | 500 | 1.669 | 1.622 | 17.19 | Example of invention |
| 326 | 800 | 780 | 0.07 | 100 | 500 | 1.673 | 1.624 | 17.24 | Example of invention |

Underlines shown in Table 6 represent conditions out of the scope of the invention. Magnetic characteristics excellent both in the 45° direction and on the whole circumferential average (high magnetic flux densities B50 and low iron losses W10/400) were obtained from Nos. 301 to 308, Nos. 312 and 314, and Nos. 316 to 326 that were the examples of the invention.

On the other hand, since Nos. 309 to 311, which were comparative examples, had a long time from the completion of the rolling of the final pass of the finish rolling to the start of cooling, Nos. 309 to 311 had low magnetic flux densities B50 and high iron losses W10/400. As a result, the magnetic characteristics of Nos. 309 to 311 were poorer than those of the examples of the invention. Since No. 313, which was a comparative example, had a low average cooling rate, No. 313 had a magnetic flux density B50 lower than the magnetic flux densities B50 of the examples of the invention and an iron loss W 10/400 higher than the iron losses W10/400 of the examples of the invention. As a result, the magnetic characteristics of No. 313 were poorer than those of the examples of the invention. Since No. 315, which was a comparative example, had a low winding temperature, No. 315 had a magnetic flux density B50 lower than the magnetic flux densities B50 of the examples of the invention and an iron loss W10/400 higher than the iron losses W10/400 of the examples of the invention. As a result, the magnetic characteristics of No. 315 were poorer than those of the examples of the invention.

## Claims

1.   A method for manufacturing a non-oriented electrical steel sheet, the method comprising:

a step of obtaining a hot-rolled steel sheet by performing hot rolling on a steel material, the steel material having a chemical composition that contains, by mass%, 0.0100% or less of C, 1.50 to 4.00% of Si, 0.0001 to 1.000% of sol.Al, 0.0100% or less of S, 0.0100% or less of N, 2.50 to 5.00% of Mn, Ni, Co, Pt, Pb, Cu, and Au in total, 0.000 to 0.400% of Sn, 0.000 to 0.400% of Sb, 0.000 to 0.400% of P, and 0.0000 to 0.0100% of Mg, Ca, Sr, Ba, Ce, La, Nd, Pr, Zn, and Cd in total with a remainder of Fe and impurities, and satisfies the following Expression (1) in a case where a Mn content is denoted by (Mn), a Ni content is denoted by (Ni), a Co content is denoted by (Co), a Pt content is denoted by (Pt), a Pb content is denoted by (Pb), a Cu content is denoted by (Cu), an Au content is denoted by (Au), a Si content is denoted by (Si), and a sol.Al content is denoted by (sol.Al);
a step of performing first cold rolling on the hot-rolled steel sheet; and
a step of performing first annealing in a temperature range lower than an Ac1 temperature after the first cold rolling,
wherein a final pass of finish rolling during the hot rolling is performed in a temperature range equal to or higher than an Ar1 temperature, and cooling of which an average cooling rate is in a range of 50 to 500°C/sec is started in 0.1 sec from completion of rolling of the final pass of the finish rolling and is performed up to a temperature range higher than 250°C and equal to or lower than 700°C.

$$((Mn)+(Ni)+(Co)+(Pt)+(Pb)+(Cu)+(Au))-((Si)+(sol.Al))>0.00\% \ ...\ (1)$$

2.   The method for manufacturing a non-oriented electrical steel sheet according to claim 1,
wherein the steel material contains one or more selected from the group consisting of, by mass%, 0.020 to 0.400% of Sn, 0.020 to 0.400% of Sb, 0.020 to 0.400% of P, and 0.0005 to 0.0100% of Mg, Ca, Sr, Ba, Ce, La, Nd, Pr, Zn, and Cd in total.

3.   The method for manufacturing a non-oriented electrical steel sheet according to claim 1 or 2, further comprising:

a step of performing second cold rolling after the first annealing,
wherein cold rolling is performed at a cumulative rolling reduction of 80 to 92% in the step of performing the first cold rolling, and
cold rolling is performed at a cumulative rolling reduction of 5 to 25% in the step of performing the second cold rolling.

4.   The method for manufacturing a non-oriented electrical steel sheet according to claim 3, further comprising:

a step of performing second annealing after the second cold rolling,
wherein an annealing temperature is set to be lower than an Ac1 temperature in the second annealing.

**Patentansprüche**

1. Ein Verfahren zur Herstellung eines nichtorientierten Elektrostahlblechs, wobei das Verfahren umfasst:

   einen Schritt des Erhaltens eines warmgewalzten Stahlblechs durch Durchführen von Warmwalzen an einem Stahlmaterial, wobei das Stahlmaterial eine chemische Zusammensetzung aufweist, die, in Massen-%, 0,0100% oder weniger C, 1,50 bis 4,00% Si, 0,0001 bis 1,000% lösliches Al, 0,0100% oder weniger S, 0,0100% oder weniger N, insgesamt 2,50 bis 5,00% Mn, Ni, Co, Pt, Pb, Cu und Au, 0,000 bis 0,400% Sn, 0,000 bis 0,400% Sb, 0,000 bis 0,400% P und insgesamt 0,0000 bis 0,0100% Mg, Ca, Sr, Ba, Ce, La, Nd, Pr, Zn und Cd mit einem Rest aus Fe und Verunreinigungen enthält, und den folgenden Ausdruck (1) erfüllt in einem Fall, in dem ein Mn-Gehalt mit (Mn) bezeichnet wird, ein Ni-Gehalt mit (Ni) bezeichnet wird, ein Co-Gehalt mit (Co) bezeichnet wird, ein Pt-Gehalt mit (Pt) bezeichnet wird, ein Pb-Gehalt mit (Pb) bezeichnet wird, ein Cu-Gehalt mit (Cu) bezeichnet wird, ein Au-Gehalt mit (Au) bezeichnet wird, ein Si-Gehalt mit (Si) bezeichnet wird, und ein Gehalt an löslichem Al mit (lösliches Al) bezeichnet wird;
   einen Schritt des Durchführens eines ersten Kaltwalzens an dem warmgewalzten Stahlblech; und
   nach dem ersten Kaltwalzen einen Schritt des Durchführens eines ersten Glühens in einem Temperaturbereich, der niedriger als eine Ac1-Temperatur ist,
   wobei ein abschließender Durchgang des Fertigwalzens während des Warmwalzens in einem Temperaturbereich durchgeführt wird, der gleich oder höher als eine Ar1-Temperatur ist, und Abkühlen, dessen mittlere Abkühlrate in einem Bereich von 50 bis 500°C/s liegt, innerhalb von 0,1 s nach Abschluss des Walzens des abschließenden Durchgangs des Fertigwalzens begonnen wird und bis zu einem Temperaturbereich von mehr als 250°C und gleich oder weniger als 700°C durchgeführt wird.

$$((Mn)+(Ni)+(Co)+(Pt)+(Pb)+(Cu)+(Au)) - ((Si)+(lösliches\ Al)) > 0,00\% \ ... \ (1)$$

2. Das Verfahren zur Herstellung eines nichtorientierten Elektrostahlblechs nach Anspruch 1, wobei das Stahlmaterial eines oder mehrere, ausgewählt aus der Gruppe bestehend aus, in Massen-%, 0,020 bis 0,400% Sn, 0,020 bis 0,400% Sb, 0,020 bis 0,400% P, und insgesamt 0,0005 bis 0,0100% Mg, Ca, Sr, Ba, Ce, La, Nd, Pr, Zn und Cd, enthält.

3. Das Verfahren zur Herstellung eines nichtorientierten Elektrostahlblechs nach Anspruch 1 oder 2, ferner umfassend:

   einen Schritt des Durchführens eines zweiten Kaltwalzens nach dem ersten Glühen,
   wobei Kaltwalzen bei einer kumulativen Walzreduktion von 80 bis 92% in dem Schritt des Durchführens des ersten Kaltwalzens durchgeführt wird, und
   Kaltwalzen bei einer kumulativen Walzreduktion von 5 bis 25% in dem Schritt des Durchführens des zweiten Kaltwalzens durchgeführt wird.

4. Das Verfahren zur Herstellung eines nichtorientierten Elektrostahlblechs nach Anspruch 3, ferner umfassend:

   einen Schritt des Durchführens eines zweiten Glühens nach dem zweiten Kaltwalzen,
   wobei eine Glühtemperatur so eingestellt wird, dass sie niedriger ist als eine Ac1-Temperatur beim zweiten Glühen.

**Revendications**

1. Méthode pour fabriquer une tôle d'acier magnétique non orientée, la méthode comprenant :

   une étape d'obtention d'une tôle d'acier laminée à chaud par mise en œuvre d'un laminage à chaud sur un matériau en acier, le matériau en acier ayant une composition chimique qui contient, en % en masse, 0,0100 % ou moins de C, 1,50 à 4,00 % de Si, 0,0001 à 1,000 % d'Al soluble, 0,0100 % ou moins de S, 0,0100 % ou moins de N, 2,50 à 5,00 % de Mn, Ni, Co, Pt, Pb, Cu et Au au total, 0,000 à 0,400 % de Sn, 0,000 à 0,400 % de Sb, 0,000 à 0,400 % de P, et 0,0000 à 0,0100 % de Mg, Ca, Sr, Ba, Ce, La, Nd, Pr, Zn et Cd au total, le reste étant du Fe et des impuretés, et satisfaisant à l'expression (1) qui suit dans le cas où la teneur en Mn est désignée par (Mn), la teneur en Ni est désignée par (Ni), la teneur en Co est désignée par (Co), la teneur en Pt est désignée par (Pt), la teneur en Pb est désignée par (Pb), la teneur en Cu est désignée par (Cu), la teneur en Au est désignée par (Au), la teneur en Si est désignée par (Si), et la teneur en Al soluble est désignée par (Al sol.) ;

une étape de mise en œuvre d'un premier laminage à froid sur la tôle d'acier laminée à chaud ; et

une étape de mise en œuvre d'un premier recuit dans une plage de températures inférieure à la température Ac1 après le premier laminage à froid,

dans laquelle un passage final de laminage de finition durant le laminage à chaud est effectué dans une plage de températures égale ou supérieure à la température Ar1, et un refroidissement pour lequel la vitesse de refroidissement moyenne est située dans la plage allant de 50 à 500 °C/s est démarré dans la 0,1 seconde suivant l'achèvement du laminage du passage final du laminage de finition et est effectué jusqu'à une plage de températures supérieure à 250 °C et égale ou inférieure à 700 °C.

$$((Mn) + (Ni) + (Co) + (Pt) + (Pb) + (Cu) + (Au)) - ((Si) + (Al \ sol.)) > 0,00 \ \% \quad (1)$$

2. Méthode pour fabriquer une tôle d'acier magnétique non orientée selon la revendication 1,

dans laquelle le matériau en acier contient un ou plusieurs choisis dans le groupe constitué par, en % en masse, 0,020 à 0,400 % de Sn, 0,020 à 0,400 % de Sb, 0,020 à 0,400 % de P, et 0,0005 à 0,0100 % de Mg, Ca, Sr, Ba, Ce, La, Nd, Pr, Zn et Cd au total.

3. Méthode pour fabriquer une tôle d'acier magnétique non orientée selon la revendication 1 ou 2, comprenant en outre :

une étape de mise en œuvre d'un deuxième laminage à froid après le premier recuit,

dans laquelle le laminage à froid est effectué à une réduction de laminage cumulative de 80 à 92 % dans l'étape de mise en œuvre du premier laminage à froid, et

le laminage à froid est effectué à une réduction de laminage cumulative de 5 à 25 % dans l'étape de mise en œuvre du deuxième laminage à froid.

4. Méthode pour fabriquer une tôle d'acier magnétique non orientée selon la revendication 3, comprenant en outre :

une étape de mise en œuvre d'un deuxième recuit après le deuxième laminage à froid,

dans laquelle la température de recuit est établie de façon à être inférieure à la température Ac1 dans le deuxième laminage.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4029430 B
- JP 6319465 B
- JP 2017193731 A
- EP 3140430 A1
- EP 3214195 A1
- JP 2019178380 A